# EUROPEAN PATENT APPLICATION

(11) **EP 4 462 932 A1**
(43) Date of publication of application: **13.11.2024**
(21) Application number: 22918857.8
(22) Date of filing: 23.12.2022
(51) Int. Cl.: H04W 72/563, H04W 76/38

(54) **COMMUNICATION DEVICE AND COMMUNICATION METHOD**

(30) Priority: 06.01.2022 JP 2022001326
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: MAEMOTO, Daiki, Kariya-city, Aichi 448-8661 (JP); TAKAHASHI, Hideaki, Kariya-city, Aichi 448-8661 (JP)
(74) Representative: TBK
(86) International application number: PCT/JP2022/047587
(87) International publication number: WO 2023/132273

(57) **Abstract**

A UE configured to perform communication with an MCG managed by a master node and an SCG managed by a secondary node comprises including an MAC entity associated with the SCG. The MAC entity manages, for each logical channel, a variable that is for uplink resource allocation to each logical channel used for communication with the SCG and has a value increasing with lapse of time. The UE is configured to perform, for the variable, a first process in reset of the MAC entity by deactivation of the SCG, perform a second process while the SCG is in an inactive state, and perform a third process when the SCG is activated.

## Description

### Cross-Reference to Related Applications

The present application claims priority to Japanese Patent Application No. 2022-001326 (filed on January 6, 2022), the contents of which are incorporated herein by reference in their entirety.

### Technical Field

The present disclosure relates to a communication apparatus and a communication method used in a mobile communication system.

### Background Art

In a mobile communication system conforming to a technical specification of a 3rd Generation Partnership Project (hereinafter, 3GPP (registered trademark)) which is a mobile communication system standardization project, dual connectivity (DC) has been introduced. In the DC, a communication apparatus (user equipment (UE)) performs communication with a master cell group (MCG) managed by a master node (also referred to as a "master base station") and a secondary cell group (SCG) managed by a secondary node (also referred to as a "secondary base station").

In the 3GPP, a technique of temporarily deactivating an SCG configured in a communication apparatus in order to suppress power consumption of the communication apparatus in the DC has been reviewed. For example, the master node instructs the communication apparatus to activate or deactivate the SCG. When the SCG is in the inactive state, communication between the communication apparatus and the SCG is stopped, so power consumption of the communication apparatus is suppressed.

On the other hand, the 3GPP technical specification specifies logical channel prioritization (LCP) (see Non Patent Literatures 1 to 3). Specifically, a medium access control (MAC) entity of the communication apparatus manages, for each logical channel, a variable that is for uplink resource allocation to each logical channel and has a value increasing with the lapse of time. In the 3GPP technical specification, the variable of each logical channel "j" is referred to as "Bj". Each time uplink transmission is performed, the communication apparatus performs uplink resource allocation to each logical channel by using the variable Bj being managed.

### Citation List

### Non Patent Literature

Non Patent Literature 1: 3GPP technical specification: TS 38.321 V16.7.0
Non Patent Literature 2: 3GPP Contribution: R2-2111638
Non Patent Literature 3: 3GPP Contribution: R2-2111314

### Summary of Invention

The communication apparatus switches the SCG to the inactive state in response to reception of an instruction for switching the SCG to the inactive state, and switches the SCG to the active state in response to reception of an instruction for switching the SCGto the active state. A method for controlling the LCP in this operation is not yet decided.

Here, according to the current 3GPP technical specification, even in a case in which the SCG is in the inactive state and the communication apparatus has no data to be transmitted to the SCG, the value of the variable Bj in the LCP may increase. Thereafter, when the SCG is activated, the LCP is performed in a state in which the variable Bj is already accumulated. Therefore, the inappropriate LCP is likely to be performed when the SCG is switched from the inactive state to the active state.

In light of the foregoing circumstances, the present disclosure provides a communication apparatus and a communication method which are capable of performing appropriate LCP when the SCG is switched from the inactive state to the active state.

A communication apparatus according to a first feature is configured to perform communication with a master cell group (MCG) managed by a master node and a secondary cell group (SCG) managed by a secondary node. The communication apparatus comprises a controller including a medium access control (MAC) entity associated with the SCG. The MAC entity manages, for each logical channel, a variable that is for uplink resource allocation to each logical channel used for communication with the SCG and has a value increasing with lapse of time, and the controller is configured to perform, for the variable, a first process in reset of the MAC entity by deactivation of the SCG, perform a second process while the SCG is in an inactive state, and perform a third process when the SCG is activated.

A communication method according to a second feature performs communication with a master cell group (MCG) managed by a master node and a secondary cell group (SCG) managed by a secondary node. The communication method comprises the steps of: managing, by a medium access control (MAC) entity associated with the SCG, for each logical channel, a variable that is for uplink resource allocation to each logical channel used for communication with the SCG and has a value increasing with lapse of time; and performing, for the variable, a first process in reset of the MAC entity by deactivation of the SCG, performing a second process while the SCG is in an inactive state, and performing a third process when the SCG is activated.

### Brief Description of Drawings

The foregoing and other objects, features, and advantages of the present disclosure will become more apparent from the following detailed description with reference to the accompanying drawings. The drawings are as follows.
Fig. 1 is a diagram illustrating a configuration of a mobile communication system according to an embodiment.
Fig. 2 is a diagram illustrating a configuration example of a protocol stack in a mobile communication system according to an embodiment.
Fig. 3 is a diagram for describing an overview of BFD and BFR according to an embodiment, and is a diagram illustrating an internal process of a UE.
Fig. 4 is a diagram for describing an overview of BFD and BFR according to an embodiment, and is a diagram illustrating an example in which a beam failure is detected in a PCell.
Fig. 5 is a diagram for describing an overview of BFD and BFR according to an embodiment, and is a diagram illustrating an example in which a beam failure is detected in an SCell.
Fig. 6 is a diagram for describing an overview of LCP according to an embodiment.
Fig. 7 is a diagram for describing an overview of DC according to an embodiment.
Fig. 8 is a diagram illustrating a configuration of a UE according to an embodiment.
Fig. 9 is a diagram illustrating a configuration of a base station according to an embodiment.
Fig. 10 is a diagram illustrating a first operation example related to BFD and BFR according to an embodiment.
Fig. 11 is a diagram illustrating a second operation example related to BFD and BFR according to an embodiment.
Fig. 12 is a diagram illustrating a third operation example related to BFD and BFR according to an embodiment.
Fig. 13 is a diagram illustrating a fourth operation example related to BFD and BFR according to an embodiment.
Fig. 14 is a diagram illustrating a first operation example related to LCP according to an embodiment.
Fig. 15 is a diagram illustrating a second operation example related to LCP according to an embodiment.
Fig. 16 is a diagram illustrating a third operation example related to LCP according to an embodiment.
Fig. 17 is a diagram illustrating a fourth operation example related to LCP according to an embodiment.
Fig. 18 is a diagram illustrating a specification modification example of MAC reset according to an embodiment.
Fig. 19 is a diagram illustrating a specification modification example of MAC reset according to an embodiment.
Fig. 20 is a diagram illustrating a specification modification example of MAC reset according to an embodiment.
Fig. 21 is a diagram illustrating a specification modification example of beam failure detection and recovery procedure (BFD and BFR) according to an embodiment.
Fig. 22 is a diagram illustrating a specification modification example of beam failure detection and recovery procedure (BFD and BFR) according to an embodiment.
Fig. 23 is a diagram illustrating a specification modification example of beam failure detection and recovery procedure (BFD and BFR) according to an embodiment.
Fig. 24 is a diagram illustrating a specification modification example of logical channel prioritization (LCP) according to an embodiment.
Fig. 25 is a diagram illustrating a variation of DC according to an embodiment.

### Description of Embodiments

Amobile communication system according to an embodiment will be described with reference to the drawings. In the description of the drawings, the same or similar parts are denoted by the same or similar reference numerals.

### (Configuration of Mobile Communication System)

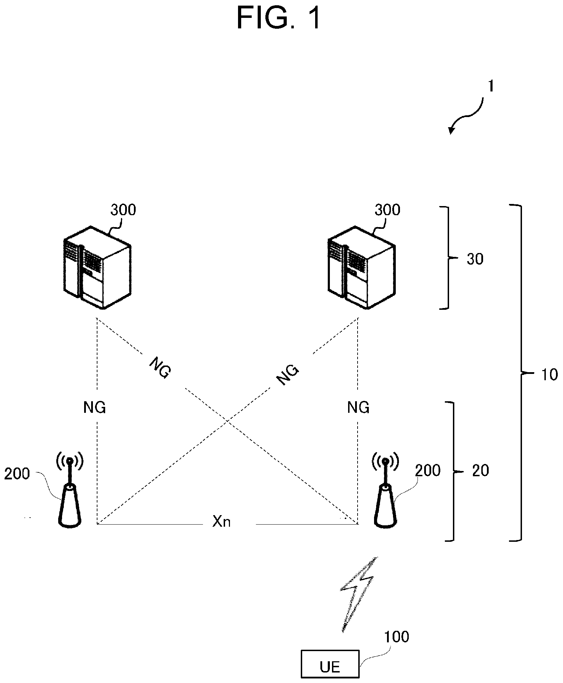

First, a configuration of a mobile communication system 1 according to an embodiment will be described with reference to Fig. 1.

The mobile communication system 1 is, for example, a system conforming to a technical specification (TS) of 3GPP. Hereinafter, a mobile communication system based on NR radio access (NR) which is a radio access technology (RAT) of a fifth generation (5G) system of 3GPP will be mainly described as the mobile communication system 1. Here, the mobile communication system 1 may have a configuration based on at least partially on evolved universal terrestrial radio access (E-UTRA)/long term evolution (LTE) which is a RAT of a fourth generation (4G) system of 3GPP.

The mobile communication system 1 includes a network 10 and a communication apparatus (user equipment (UE)) 100 that communicates with the network 10. The network 10 includes a radio access network (RAN) 20 and a core network (CN) 30. The RAN 20 is a next generation radio access network (NG-RAN) in 5G/NR. The RAN 20 may be an evolved universal terrestrial radio access network (E-UTRAN) in 4G/LTE. The CN 30 is a 5th generation core network (5GC) in 5G/NR. The CN 30 may be an evolved packet core (EPC) in 4G/LTE.

The UE 100 is an equipment used by a user. The UE 100 is, for example, a mobile apparatus such as a mobile phone terminal such as a smartphone, a tablet terminal, a notebook personal computer (PC), a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. It is noted that the UE 100 may be referred to as other names such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The RAN 20 includes a plurality of base stations 200. Each of the base stations 200 manages at least one cell. A cell forms a minimum unit of a communication area. For example, one cell belongs to one frequency (a carrier frequency) and is formed by one component carrier. The term "cell" may represent a radio communication resource, and may also represent a communication target of the UE 100. Each base station 200 can perform radio communication with the UE 100 existing in its own cell. The base station 200 communicates with the UE 100 by using a protocol stack of the RAN. The base station 200 provides user plane and control plane protocol terminations towards the UE 100 and is connected to the CN 30 via a network interface between the base station and the CN. The base station 200 in 5G/NR is referred to as a gNodeB (gNB), and the base station 200 in 4G/LTE is referred to as an eNodeB (eNB). Further, the interface between the base station and the CN in 5G/NR is referred to as an NG interface, and the interface between the base station and the CN in 4G/LTE is referred to as an S1 interface. The base station 200 is connected to a neighboring base station via a network interface between base stations. An interface between base stations in 5G/NR is referred to as an Xn interface, and an interface between base stations in 4G/LTE is referred to as an X2 interface.

The CN 30 includes a core network apparatus 300. The core network apparatus 300 is an access and mobility management function (AMF) and/or a user plane function (UPF) in 5G/NR. The core network apparatus 300 may be a mobility management entity (MME) and/or a serving gateway (S-GW) in 4G/LTE. The AMF/MME performs mobility management of the UE 100. The UPF/S-GW provides a function specialized for user plane processing.

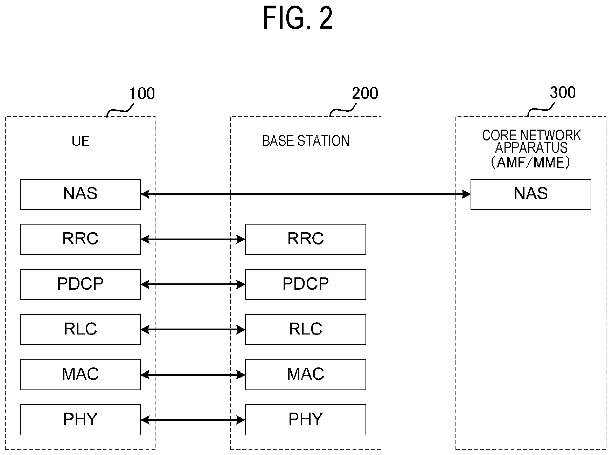

Next, a configuration example of a protocol stack in the mobile communication system 1 according to the embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs coding/decoding, modulation/demodulation, antenna mapping/demapping, and resource mapping/demapping. Data and control information are transmitted between the PHY layer of the UE 100 and the PHY layer of the base station 200 via a physical channel.

The physical channel includes a plurality of OFDM symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control. For example, the UE 100 performs blind decoding of the PDCCH using a cell-radio network temporary identifier (C-RNTI) and a modulation and coding scheme-C-RNTI (MCS-C-RNTI) or a configured scheduling-RNTI (CS-RNTI) allocated from the base station 200 to the UE 100, and acquires a DCI which has been successfully decoded as a DCI addressed to its own UE. Here, a cyclic redundancy check (CRC) parity bit scrambled by the C-RNTI and the MCS-C-RNTI or the CS-RNTI is added to the DCI transmitted from the base station 200.

In the NR, the UE 100 can use a bandwidth narrower than a system bandwidth (that is, the bandwidth of the cell). The base station 200 configures a bandwidth part (BWP) including consecutive PRBs in the UE 100. The UE 100 transmits and receives data and a control signal in an active BWP. In the UE 100, for example, a maximum of four BWPs can be configured. The BWPs may have different subcarrier spacings. Further, the frequencies of the BWPs may overlap with each other. In a case in which a plurality of BWPs are configured for the UE 100, the base station 200 can designate which BWP is to be activated by control in downlink. As a result, the base station 200 can dynamically adjust a UE bandwidth according to the amount of data traffic of the UE 100 and the like, and can reduce the UE power consumption.

The base station 200 can configure, for example, a maximum of three control resource sets (CORESETs) in each of a maximum of four BWPs on a serving cell. The CORESET is a radio resource for control information to be received by the UE 100. A maximum of 12 CORESETs can be configured on the serving cell in the UE 100. Each CORESET has indices 0 to 11. For example, the CORESET includes 6 resource blocks (PRB) and one, two, or 3 consecutive OFDM symbols in the time domain.

The MAC layer performs priority control of data, a retransmission process by hybrid ARQ (HARQ: Hybrid Automatic Repeat reQuest), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, and modulation and coding scheme (MCS)) and allocated resources to the UE 100.

The RLC layer transmits data to the RLC layer on the reception side using the functions of the MAC layer and the PHY layer. Data and control information are transmitted, via a logical channel, between the RLC layer of the UE 100 and the RLC layer of the base station 200.

The PDCP layer performs header compression/decompression and encryption/decryption.

A service data adaptation protocol (SDAP) layer may be provided as an upper layer of the PDCP layer. The SDAP layer performs mapping between an IP flow that is a unit in which a core network performs quality of service (QoS) control, and a radio bearer that is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case in which there is an RRC connection between the RRC of the UE 100 and the RRC of the base station 200, the UE 100 is in an RRC connected state. In a case in which there is no RRC connection between the RRC of the UE 100 and the RRC of the base station 200, the UE 100 is in an RRC idle state. In a case in which an RRC connection between the RRC of the UE 100 and the RRC of the base station 200 is suspended, the UE 100 is in an RRC inactive state.

A non-access stratum (NAS) layer located above the RRC layer performs session management and mobility management of the UE 100. NAS signaling is transmitted between the NAS layer of the UE 100 and the NAS layer of the core network apparatus 300 (AMF/MME). Note that the UE 100 has an application layer and the like in addition to the radio interface protocol.

### (Overview of BFD and BFR)

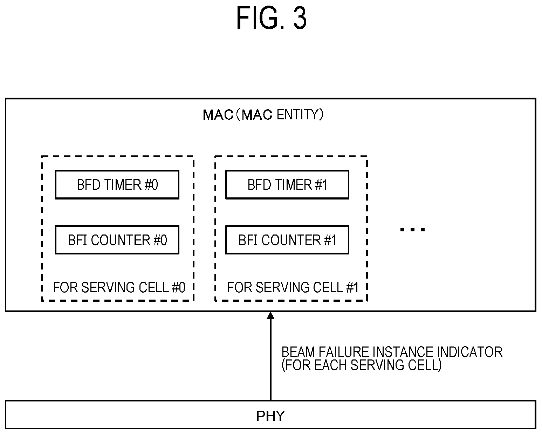

Next, an overview of beam failure detection (BFD) and beam failure recovery (BFR) according to an embodiment will be described with reference to Figs. 3 to 5.

The 5G/NR can perform broadband transmission in a high frequency band such as a millimeter wave band or a terahertz wave band as compared with 4G/LTE. In order to compensate for radio wave attenuation for radio waves in such a high frequency band, the 5G/NR uses highly directional beamforming using a large number of antennas between the base station 200 and the UE 100 to obtain high beam gain. In the NR, a beam control technology for establishing and maintaining a beam pair between the base station 200 and the UE 100 is introduced. The BFD and the BFR are one of such beam control techniques.

For the BFD, the base station 200 configures, in the UE 100, a downlink reference signal resource for detecting beam failure. The reference signal resource is any one of an SS/PBCH block (SSB) and a channel state information reference signal (CSI-RS). The SSB includes a primary synchronization signal (PSS), a secondary synchronization signal (SSS), a physical broadcast channel (PBCH), and a demodulation reference signal (DMRS). For example, the SSB may be composed of four consecutive OFDM symbols in the time domain. In addition, the SSB may be composed of 240 consecutive subcarriers (that is, 20 resource blocks) in the frequency domain. The PBCH is a physical channel that carries a master information block (MIB). The CSI-RS is a reference signal that is transmitted for the UE 100 to measure a state of a radio channel.

As illustrated in Fig. 3, in the UE 100, the MAC layer (MAC entity) manages a beam failure instance (BFI) counter and a BFD timer for each serving. The parameters (for example, the BFI counter and/or the BFD timer) managed by the MAC entity to perform the BFD are referred to as BFD parameters. The MAC entity of the UE 100 counts a beam failure event (beam failure instance indicator) notified from the PHY layer for a certain serving cell by the BFI counter, and detects (recognizes) the beam failure for the serving cell when a count value of the BFI counter becomes equal to or larger than a threshold value before the BFD timer expires. The BFD timer is a timer that starts or restarts when the MAC entity receives the beam failure instance indicator. The threshold value of the BFI counter and the timer configuration value of the BFD timer are configured in the UE 100 from the network 10. When the beam failure is detected, the MAC entity of the UE 100 performs the BFR to recover from the beam failure.

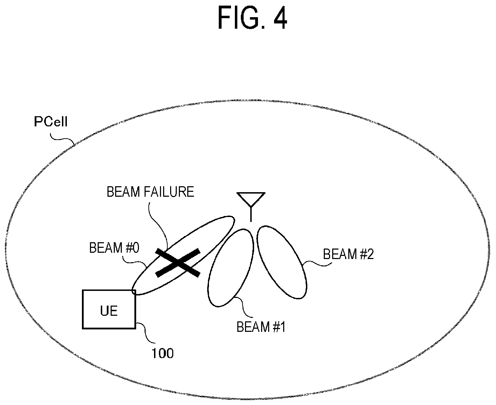

Fig. 4 illustrates an example in which the beam failure is detected in a primary cell (PCell) functioning as a serving cell. Fig. 4 illustrates an example in which the PSCell has a total of three beams #0 to #2. The MAC entity of the UE 100 detects the beam failure during communication using a certain beam (for example, the beam #0) in the PSCell. In this case, the MAC entity of the UE 100 triggers the BFR by initiating a random access procedure for the PCell. Here, the MAC entity of the UE 100 starts the BFR timer that defines a duration during which random access is attempted. Then, the MAC entity of the UE 100 selects an appropriate beam (for example, the beam #1) to perform the BFR. When the random access procedure is completed, the BFR is completed.

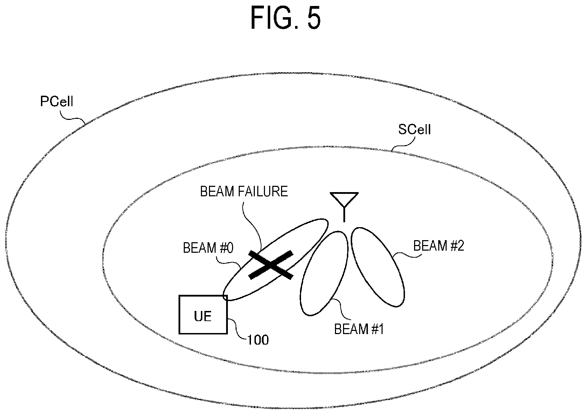

Fig. 5 illustrates an example in which the beam failure is detected in a secondary cell (SCell) functioning as a serving cell. Fig. 5 illustrates an example in which the SCell includes a total of three beams #0 to #2. The MAC entity of the UE 100 detects the beam failure during communication using a certain beam (for example, the beam #0) in the SCell. In this case, the UE 100 triggers the BFR by initiating transmission of a BFR MAC CE. Here, the MAC entity of the UE 100 selects a beam (for example, the beam #1) suitable for the SCell, and indicates the selected beam information together with information regarding the beam failure by the BFR MAC CE. When the MAC entity of the UE 100 receives the PDCCH indicating uplink grant for new transmission of the HARQ process used for the transmission of the BFR MAC CE, the BFR of the SCell 250B is completed.

### (Overview of LCP)

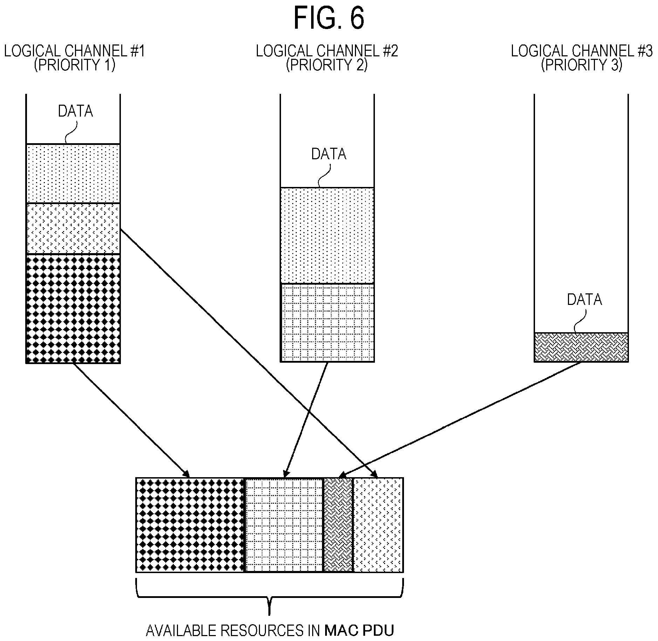

Next, an overview of logical channel prioritization (LCP) according to an embodiment will be described with reference to Fig. 6.

In the uplink, the MAC entity of the UE 100 performs the LCP when generating a MAC protocol data unit (PDU) to be transmitted by using radio resources allocated from the base station 200. The MAC entity of the UE 100 determines a data amount of each logical channel to be included in the new MAC PDU in accordance with a priority of each logical channel, so as to satisfy the quality of service (QoS) required for each configured radio bearer (each logical channel), on the basis of on the uplink grant notified by the PDCCH. The LCP procedure is applied when new transmission is performed.

As illustrated in Fig. 6, the MAC entity of the UE 100 stores data in the MAC PDU in descending order of priority of from the logical channel until the available size of the MAC PDU is reached. The network 10 (RRC) configures a priority, a prioritized bit rate (PBR), and a bucket size duration (BSD) in the UE 100 for each logical channel in order to control scheduling of uplink data for each logical channel. Here, the priority indicates that the higher the value, the lower the priority.

Further, the MAC entity of the UE 100 manages a variable Bj for each logical channel j. Bj is initialized to zero when an associated logical channel is established, and is increased by PBR × T. Here, "PBR" indicates the prioritized bit rate of the logical channel j, and "T" indicates a time elapsed since Bj was last increased. Here, the value of Bj is not allowed to exceed the bucket size. The bucket size is equal to PBR × BSD. In a case in which the value of Bj is greater than the bucket size of the logical channel j, the MAC entity of UE 100 configures the value of Bj in the bucket size.

Then, the MAC entity of the UE 100 allocates resources to selected logical channels with Bj > 0 in priority order. It should be noted that, in a case in which the PBR of the logical channel is configured to infinity, the MAC entity allocates resources to all data that can be used for transmission on the logical channel with the PBR configured to infinity before meeting the PBR of the logical channel with the low priority. The MAC entity also decreases Bj by the total size of data (MAC SDU) provided to the logical channel j. In a case in which any resources remain, all selected logical channels are provided with resources in accordance with the priority until either the data of the logical channel or the uplink grant is used up.

### (Overview of DC)

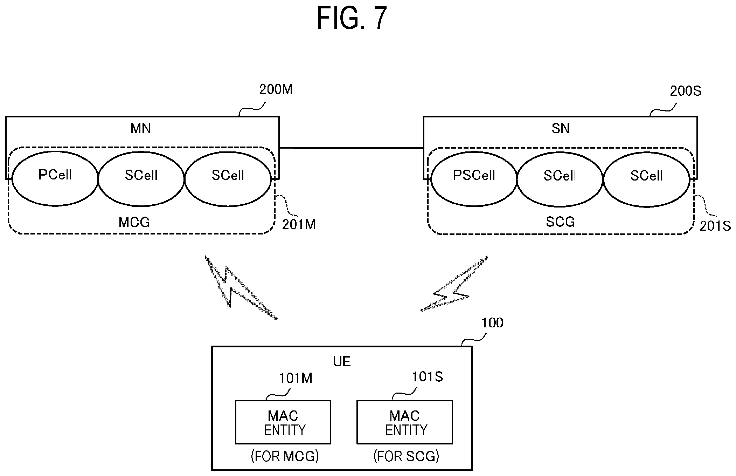

Next, an overview of the DC according to an embodiment will be described with reference to Fig. 7.

In the DC, the UE 100 communicates with a master cell group (MCG) 200M managed by a master node (MN) 201M and a secondary cell group (SCG) 200S managed by a secondary node (SN) 201S. The MN 200M and the SN 200S are connected to each other via a network interface. The network interface between the MN 200M and the SN 200 may be an Xn interface or an X2 interface. The MN 200M and the SN 200 communicate with each other via the network interface. Note that the MN 200M is also referred to as a master base station. The SN 200S is also referred to as a secondary base station.

For example, the MN 200M transmits a predetermined message (for example, an SN addition request message) to the SN 200S, and the MN 200M transmits an RRC reconfiguration message to the UE 100, so that the DC is initiated. In the DC, the UE 100 in the RRC connected state is allocated the radio resources from the schedulers of the MN 200M and the SN 200S, and performs radio communication using the radio resources of the MN 200M and the radio resources of the SN 200S.

The MN 200M may have a control plane connection with the core network. The MN 200M provides main radio resources of the UE 100. The MN 200M manages the MCG 201M. The MCG 201M is a group of serving cells associated with the MN 200M. The MCG 201M includes a primary cell (PCell), and optionally includes one or more secondary cells (SCells).

The SN 200S may not have a control plane connection with the core network. The SN 200S provides additional radio resources to the UE 100. The SN 200S manages the SCG 201S. The SCG 201S includes a primary secondary cell (PSCell), and optionally includes one or more SCells. Note that the PCell of the MCG 201M and the PSCell of the SCG 201S are also referred to as special cells (SpCells).

As described above, in the DC, the roles of the nodes communicating with the UE 100 are divided into the MN 200M and the SN 200S. Except for the configuration independently decided in the SN 200S, the MN 200M has the initiative to decide the configuration for the UE 100.

Further, in the DC, the two MAC entities 101M and 101S are configured in the UE 100. One is a MAC entity 101M for the MCG 201M, and the other is a MAC entity 101S for the SCG 201S. The serving cell of the MCG 201M other than the PCell can be activated/deactivated by the MAC control element (CE) received by the MCG 201M. The serving cell of the SCG 201S other than the PSCell can be activated/deactivated by the MAC CE received by the SCG 201S. The PSCell of the SCG 201S is consistently in the activated state (active state), similarly to the PCell.

Currently, in the 3GPP, a technique of activating/deactivating in units of the SCG 201S configured in the UE 100 instead of activating/deactivating in units of serving cells as described above has been reviewed. In a case in which the SCG 201S is in the inactive state, all the serving cells (the PSCell and the SCell) belonging to the SCG 201S are in the inactive state. For example, the MN 200M transmits an RRC message for instructing (configuring) the activation or the deactivation of the SCG 201S to the UE 100. The RRC message may be an RRC reconfiguration message. The UE 100 activates or deactivates the SCG 201S in response to the reception of the instruction.

The inactive state of the SCG 201S may be a state in which the UE 100 does not transmit at least one of channel status information (CSI), sounding reference signal (SRS), and UL-shared channel (UL-SCH) to each serving cell (particularly, the PSCell) belonging to the SCG 201S in the inactive state, and/or a state in which the UE 100 does not monitor physical downlink control channel (PDCCH). When the SCG 201S is in the inactive state, communication between the UE 100 and the SCG 201S is stopped, so power consumption of the UE 100 is suppressed.

In the current discussion in the 3GPP, it is agreed that the network 10 (for example, the MN 200M) can configure the UE 100 to perform the BFD on the SCG 201S (particularly, the PSCell) when the SCG 2015 is in the inactive state. Further, in the current discussion in the 3GPP, resetting the MAC entity when the SCG 201S is switched to the inactive state has been reviewed. Further, the conventional MAC reset process is executed at the time of RRC reconfiguration or the like, and is a process of resetting the MAC parameters, and for example, the following is executed:
·all timers managed by MAC entity are stopped;
·the scheduling request (SR), the buffer status report (BSR), the power headroom report (PHR), the BFR, and the like executed by the MAC entity are canceled; and
·the counter (including the BFI counter) managed by the MAC entity is set to zero (that is, resetting is performed).

In a case in which the UE 100 is configured to perform the BFD on the SCG 201S (particularly, the PSCell) when the SCG 201S is in the inactive state, if the UE 100 resets the BFD parameters (particularly, the BFI count value) when the SCG 201S is switched to the inactive state, the detection state in the BFD until that point is initialized. As a result, after the SCG 201S enters the inactive state, the BFD is delayed, and it becomes a state in which a beam with low quality is configured during that time. Therefore, the current SCG 201S deactivation method has room for improvement in efficiently performing the BFD when the SCG 201S is in the inactive state.

In addition, in a series of operations by which the UE 100 causes the SCG 201S to enter the inactive state and then causes the SCG 201S to enter the active state, a method of controlling the LCP is not decided. Here, according to the current 3GPP technical specification, even in a case in which the SCG 201S is in the inactive state and the UE 100 has no data to be transmitted to the SCG 201S, the value of the variable Bj in the LCP may increase. Thereafter, when the SCG 201S is activated, the LCP is performed in a state where the variable Bj is already accumulated. Therefore, the inappropriate LCP is likely to be performed when the SCG 201S is switched from the inactive state to the active state.

### (Configuration of UE)

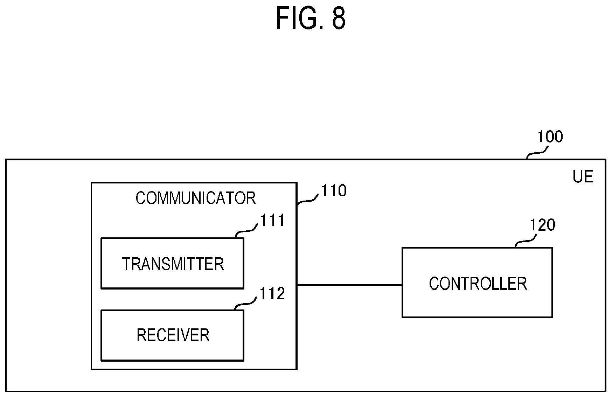

Next, a configuration of the UE 100 according to an embodiment will be described with reference to Fig. 8. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into space. Further, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that executes digital processing of the signal transmitted and received via the antenna and the RF circuit. The digital processing includes processing of the protocol stack of the RAN. Further, the memory stores a program executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or a part of the memory may be included in the processor.

The UE 100 configured as described above performs DC communication with the MCG 201M and the SCG 201S (see Fig. 7). The controller 120 includes a MAC entity 101S associated with the SCG 201S. The receiver 112 receives an SCG deactivation instruction for causing the SCG 201S to enter the inactive state. The receiver 112 may receive an RRC message including the SCG deactivation instruction from the MN 200M (MCG 201M). The MAC entity 101S manages the BFD parameters for performing the BFD on the SCG 201S (particularly, the PSCell). In a case in which it is configured to perform the BFD when the SCG 2015 is in the inactive state, the controller 120 performs a process of resetting the MAC entity 101S while maintaining the BFD parameters in response to the reception of the SCG deactivation instruction. Accordingly, since the BFD parameters (for example, the BFI count value and the BFD timer) are not reset when the SCG 201S is switched to the inactive state, the detection state in the BFD until that point is continued. As a result, the beam failure can be detected by performing the BFD promptly after the SCG 201S enters the inactive state. That is, even after entering the SCG inactive state, the state before entering is maintained, so the BFD and the BFR can be continuously executed, and the execution delay can be prevented. Therefore, it is possible to efficiently perform the BFD when the SCG 201S is in the inactive state. Hereinafter, the process of partially resetting the MAC parameter when the SCG 201S is deactivated is also referred to as "partial MAC reset".

On the other hand, in a case in which it is not configured to perform the BFD when the SCG 201S is in the inactive state, the controller 120 may perform a process of resetting the MAC entity 101S while resetting or stopping the BFD parameters in response to the reception of the SCG deactivation instruction. As described above, since the BFD parameters are reset or stopped, the processing load of the UE 100 can be reduced.

Further, in the UE 100, the MAC entity 101S associated with the SCG 201S manages, for each logical channel, the variable Bj that is a variable for allocating the uplink resources to each logical channel used for communication with the SCG 201S and has a value increasing with the lapse of time. For the variable Bj, the controller 120 performs a first process when the SCG 201S is switched to the inactive state, performs a second process while the SCG 201S is in the inactive state, and performs a third process when the SCG 201S is switched to the active state. Here, the controller 120 performs the first to third processes such that the value of the variable Bj becomes zero when the SCG 201S is switched to the active state. Since the value of the variable Bj becomes zero when the SCG 201S is switched to the active state, when the SCG 201S is switched from the inactive state to the active state, the LCP can be prevented from being performed in the state in which the variable Bj has already been accumulated. Therefore, it is possible to perform appropriate LCP when the SCG 201S is switched from the inactive state to the active state.

At least some of the first to third processes may be different from the other processes. Note that the first process may be a process in the partial reset of the MAC entity 101S. The third process may be a process in the reset of the MAC entity 101S.

### (Configuration of Base Station)

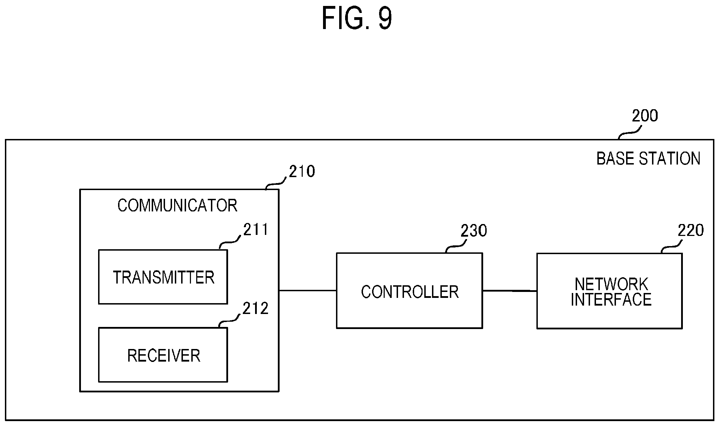

Next, a configuration of the base station 200 according to an embodiment will be described with reference to Fig. 9. The base station 200 includes a communicator 210, a network interface 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network interface 220 transmits and receives a signal to and from a network. The network interface 220 receives, for example, a signal from a neighboring base station connected via an Xn interface, which is an interface between base stations, and transmits the signal to the neighboring base station. In addition, the network interface 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Furthermore, the controller 230 controls, for example, communication with a node (for example, the neighboring base station and the core network apparatus 300) via the network interface 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via the antenna and the RF circuit. The digital processing includes processing of the protocol stack of the RAN. Further, the memory stores a program executed by the processor, parameters related to the program, and data related to the program. All or a part of the memory may be included in the processor.

### (Operation Example of UE)

### (1) Operation Examples Related to BFD and BFR

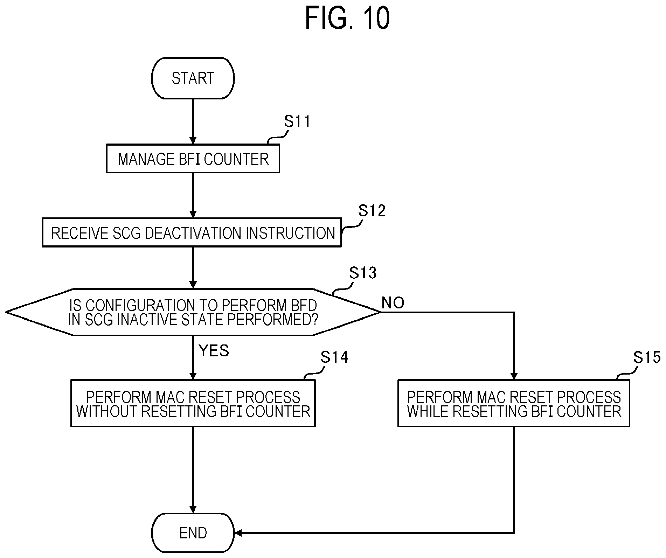

Next, first to fourth operation examples of the UE 100 related to the BFD and the BFR according to an embodiment will be described with reference to Figs. 10 to 13. The first to fourth operation examples may be implemented such that each operation example is separately and independently performed. Furthermore, the first to fourth operation examples may be implemented such that two or more operation examples are combined.

### (1.1) First Operation Example Related to BFD and BFR

The BFD parameters managed by the MAC entity 101S for the SCG 201S include the count value (the BFI counter) obtained by counting the beam failure instance indicators notified from the physical layer of the UE 100 to the MAC entity 101S. The MAC entity 101S detects the beam failure in response to the count value of the BFI counter reaching the threshold value. In a case in which it is configured to perform the BFD when the SCG 201S is in the inactive state, the controller 120 of the UE 100 performs the process of resetting the MAC entity 101S without resetting the count value of the BFI counter in response to the reception of the SCG deactivation instruction. Accordingly, since the count value of the BFI counter before the SCG 201S is deactivated is maintained, the beam failure can be detected promptly after the SCG 201S is deactivated.

On the other hand, in a case in which it is not configured to perform the BFD when the SCG 201S is in the inactive state, the controller 120 of the UE 100 performs the process of resetting the MAC entity 101S while resetting the count value of the BFI counter in response to the reception of the SCG deactivation instruction. As the count value of the BFI counter is reset, the memory use amount and the processing load of the UE 100 can be reduced, and the occurrence of an unexpected error can be prevented.

Fig. 10 is a flowchart illustrating the present operation example.

In step S11, the controller 120 of the UE 100 (specifically, the MAC entity 101S for the SCG 201S) manages the BFI counter for each serving cell included in the SCG 201S.

In step S12, the receiver 112 of the UE 100 receives the SCG deactivation instruction from, for example, the MN 200M (MCG 201M).

In step S13, the controller 120 of the UE 100 determines whether it is configured to perform the BFD in the SCG inactive state. For example, in a case in which the receiver 112 receives the RRC message including configuration information for configuring the BFD to be performed in the SCG inactive state from, for example, the MN 200M (MCG 201M), the controller 120 of the UE 100 may determine that it is configured to perform the BFD in the SCG inactive state.

In a case in which it is determined that it is configured to perform the BFD in the SCG inactive state (YES in step S13), in step S14, the controller 120 of the UE 100 performs the process of resetting the MAC entity 101S without resetting the count value of the BFI counter in response to the reception of the SCG deactivation instruction.

On the other hand, in a case in which it is determined that it is not configured to perform the BFD in the SCG inactive state (NO in step S13), in step S15, the controller 120 of the UE 100 performs the process of resetting the MAC entity 101S while resetting the count value of the BFI counter in response to the reception of the SCG deactivation instruction.

### (1.2) Second Operation Example Related to BFD and BFR

The BFD parameters managed by the MAC entity 101S for the SCG 201S include the BFD timer for the BFD. The MAC entity 101S detects the beam failure in response to the count value of the BFI counter reaching the threshold value before the BFD timer expires. In a case in which it is configured to perform the BFD when the SCG 201S is in the inactive state, the controller 120 of the UE 100 performs the process of resetting the MAC entity 101S without stopping the BFD timer in response to the reception of the SCG deactivation instruction. As described above, as the BFD timer is not stopped, the BFD can be appropriately performed even when the SCG 201S is deactivated.

On the other hand, in a case in which it is not configured to perform the BFD when the SCG 201S is in the inactive state, the controller 120 of the UE 100 performs the process of resetting the MAC entity 101S while stopping the BFD timer in response to the reception of the SCG deactivation instruction. As the BFD timer is stopped, the processing load of the UE 100 can be reduced, and the occurrence of an unexpected error can be prevented.

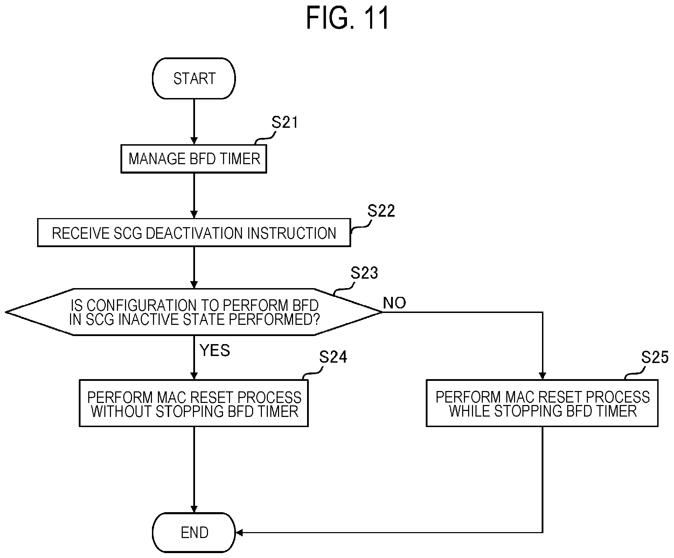

Fig. 11 is a flowchart illustrating the present operation example. Here, the description will proceed focusing on the differences from the first operation example regarding the BFD and the BFR, and redundant description will be omitted.

In step S21, the controller 120 of the UE 100 (specifically, the MAC entity 101S for the SCG 201S) manages the BFD timer for each serving cell included in the SCG 201S.

In step S22, the receiver 112 of the UE 100 receives the SCG deactivation instruction from, for example, the MN 200M (MCG 201M).

In step S23, the controller 120 of the UE 100 determines whether it is configured to perform the BFD in the SCG inactive state.

In a case in which it is determined that it is configured to perform the BFD in the SCG inactive state (YES in step S23), in step S24, the controller 120 of the UE 100 performs the process of resetting the MAC entity 101S without stopping the BFD timer in response to the reception of the SCG deactivation instruction.

On the other hand, in a case in which it is determined that it is not configured to perform the BFD in the SCG inactive state (NO in step S23), in step S25, the controller 120 of the UE 100 performs the process of resetting the MAC entity 101S while stopping the BFD timer in response to the reception of the SCG deactivation instruction.

### (1.3) Third Operation Example Related to BFD and BFR

The MAC entity 101S for the SCG 201S manages the BFR timer for performing the BFR when the beam failure is detected by the BFD. In a case in which it is configured to perform the BFD when the SCG 201S is in the inactive state, the controller 120 of the UE 100 performs the process of resetting the MAC entity 101S without stopping the BFR timer in response to the reception of the SCG deactivation instruction. As the BFR timer is not stopped, the BFR can be appropriately performed even when the SCG 201S is deactivated.

On the other hand, in a case in which it is not configured to perform the BFD when the SCG 201S is in the inactive state, the controller 120 of the UE 100 performs the process of resetting the MAC entity 101S while stopping the BFR timer in response to the reception of the SCG deactivation instruction. As the BFR timer is stopped, the processing load of the UE 100 can be reduced, and the occurrence of an unexpected error can be prevented.

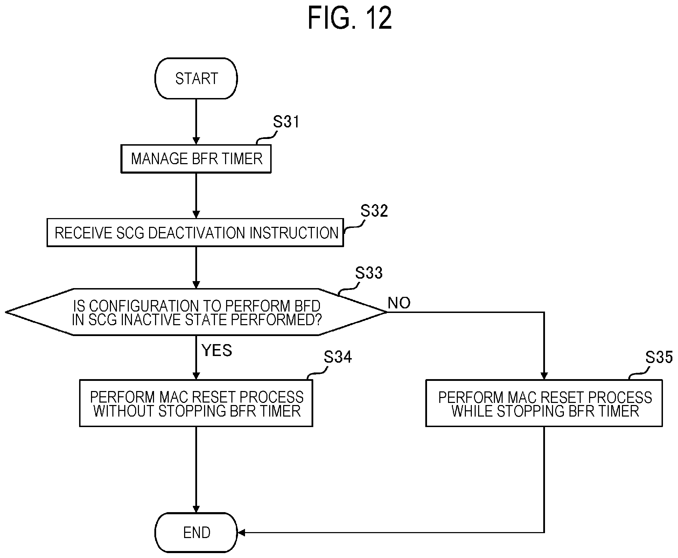

Fig. 12 is a flowchart illustrating the present operation example. Here, the description will proceed focusing on the differences from the first operation example regarding the BFD and the BFR, and redundant description will be omitted.

In step S31, the controller 120 of the UE 100 (specifically, the MAC entity 101S for the SCG 201S) manages the BFR timer for each serving cell included in the SCG 201S.

In step S32, the receiver 112 of the UE 100 receives the SCG deactivation instruction from, for example, the MN 200M (MCG 201M).

In step S33, the controller 120 of the UE 100 determines whether it is configured to perform the BFD in the SCG inactive state.

In a case in which it is determined that it is configured to perform the BFD in the SCG inactive state (YES in step S33), in step S34, the controller 120 of the UE 100 performs the process of resetting the MAC entity 101S without stopping the BFR timer in response to the reception of the SCG deactivation instruction.

On the other hand, in a case in which it is determined that it is not configured to perform the BFD in the SCG inactive state (NO in step S33), in step S35, the controller 120 of the UE 100 performs the process of resetting the MAC entity 101S while stopping the BFR timer in response to the reception of the SCG deactivation instruction.

### (1.4) Fourth Operation Example Related to BFD and BFR

The MAC entity 101S for the SCG 201S triggers the BFR in response to the detection of the beam failure by the BFD. In a case in which it is configured to perform the BFD when the SCG 201S is in the inactive state, when the BFR is triggered at the time of receiving the SCG deactivation instruction, the controller 120 of the UE 100 performs the process of resetting the MAC entity 101S without canceling the triggered BFR. As the triggered BFR is not canceled, the BFR can be appropriately performed even when the SCG 201S is deactivated.

On the other hand, in a case in which it is not configured to perform the BFD when the SCG 201S is in the inactive state, when the BFR is triggered at the time of receiving the SCG deactivation instruction, the controller 120 of the UE 100 performs the process of resetting the MAC entity 101S while canceling the triggered BFR. As the triggered BFR is canceled, the processing load of the UE 100 can be reduced, and the occurrence of an unexpected error can be prevented.

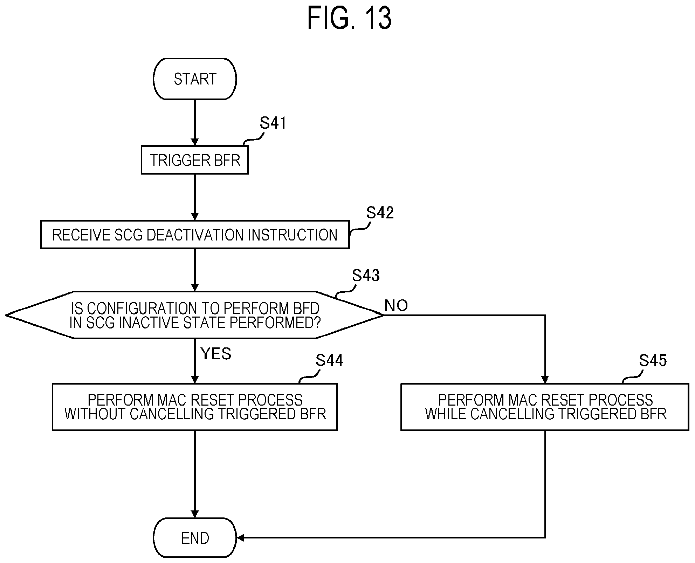

Fig. 13 is a flowchart illustrating the present operation example. Here, the description will proceed focusing on the differences from the first operation example regarding the BFD and the BFR, and redundant description will be omitted.

In step S41, the controller 120 of the UE 100 (specifically, the MAC entity 101S for the SCG 201S) triggers the BFR for the SCG 201S.

In step S42, the receiver 112 of the UE 100 receives the SCG deactivation instruction from, for example, the MN 200M (MCG 201M).

In step S43, the controller 120 of the UE 100 determines whether it is configured to perform the BFD in the SCG inactive state.

In a case in which it is determined that it is configured to perform the BFD in the SCG inactive state (YES in step S43), in step S44, the controller 120 of the UE 100 performs the process of resetting the MAC entity 101S without canceling the triggered BFR in response to the reception of the SCG deactivation instruction.

On the other hand, in a case in which it is determined that it is not configured to perform the BFD in the SCG inactive state (NO in step S43), in step S45, the controller 120 of the UE 100 performs the process of resetting the MAC entity 101S while canceling the triggered BFR in response to the reception of the SCG deactivation instruction.

### (2) Operation Example Related to LCP

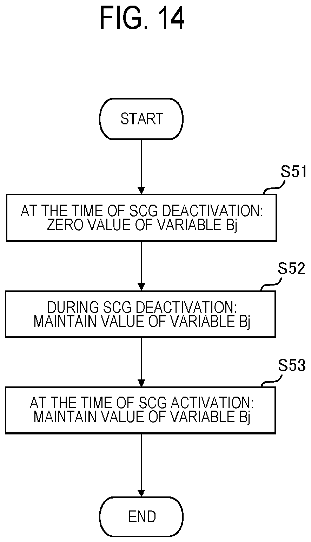

Next, first to fourth operation examples of the UE 100 related to the LCP according to an embodiment will be described with reference to Figs. 14 to 17. The UE 100 performs any operation of the first to fourth operation examples.

In the first to fourth operation examples of the UE 100 related to the LCP, the controller 120 of the UE 100 (specifically, the MAC entity 101S for the SCG 201S) manages the variable Bj for each logical channel. For the variable Bj, the controller 120 of the UE 100 performs a first process when the SCG 201S is switched to the inactive state, performs a second process while the SCG 201S is in the inactive state, and performs a third process when the SCG 201S is switched to the active state. Here, the controller 120 of the UE 100 performs the first to third processes such that the value of the variable Bj becomes zero when the SCG 201S is switched to the active state.

### (2.1) First Operation Example Related to LCP

In the first operation example related to LCP, a first process is a processing of setting the value of the variable Bj to zero (that is, performing initialization), a second process is a process of maintaining the value of the variable Bj, and a third processing is a process of maintaining the value of the variable Bj. As described above, when the SCG 201S is switched to the inactive state, the value of the variable Bj is initialized, and then the value of the variable Bj is maintained, and thus the value of the variable Bj can be set to zero (that is, an initial value) when the SCG 201S is switched to the active state. In particular, when the SCG 201S is in the inactive state, the value of the variable Bj is not increased but maintained, and thus the processing load of the UE 100 can be reduced.

Fig. 14 is a flowchart illustrating the present operation example.

In step S51, the controller 120 of the UE 100 (MAC entity 101S for SCG 201S) sets the variable Bj managed by the MAC entity 101S to zero in the partial MAC reset at the time of SCG deactivation.

In step S52, the controller 120 of the UE 100 (MAC entity 101S for SCG 201S) maintains the variable Bj managed by the MAC entity 101S without increasing the variable Bj while the SCG is in the inactive state.

In step S53, the controller 120 of the UE 100 (MAC entity 101S for SCG 201S) maintains the variable Bj managed by the MAC entity 101S without increasing the variable Bj in the MAC reset at the time of SCG activation (that is, the variable Bj is maintained at zero).

### (2.2) Second Operation Example Related to LCP

In the second operation example related to LCP, a first process is a processing of maintaining the value of the variable Bj, a second process is a process of increasing the value of the variable Bj, and a third processing is a process of setting the value of the variable Bj to zero (that is, performing initialization). As a result, when the SCG 2015 is switched to the active state, the value of the variable Bj can be set to zero (that is, the initial value).

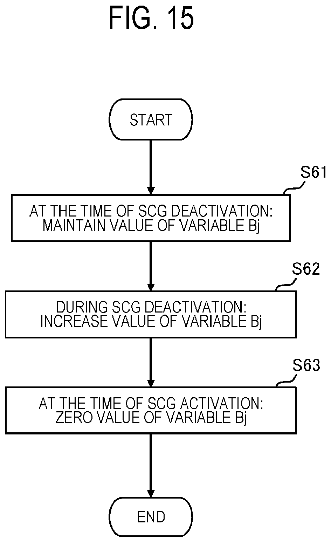

Fig. 15 is a flowchart illustrating the present operation example.

In step S61, the controller 120 of the UE 100 (MAC entity 101S for SCG 201S) maintains the variable Bj managed by the MAC entity 101S without performing initialization in the partial MAC reset at the time of SCG deactivation.

In step S62, the controller 120 of the UE 100 (MAC entity 101S for SCG 201S) increases the variable Bj managed by the MAC entity 101S by PBR × T while the SCG is in the inactive state.

In step S63, the controller 120 of the UE 100 (MAC entity 101S for SCG 201S) sets the variable Bj managed by the MAC entity 101S to zero (that is, performs initialization) in the MAC reset at the time of SCG activation.

### (2.3) Third Operation Example Related to LCP

In the third operation example related to LCP, a first process is a processing of setting the value of the variable Bj to zero, a second process is a process of increasing the value of the variable Bj, and a third processing is a process of setting the value of the variable Bj to zero. As a result, when the SCG 201S is switched to the active state, the value of the variable Bj can be set to zero (that is, the initial value).

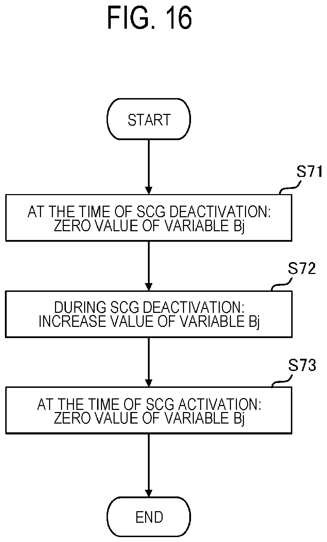

Fig. 16 is a flowchart illustrating the present operation example.

In step S71, the controller 120 of the UE 100 (MAC entity 101S for SCG 201S) sets the variable Bj managed by the MAC entity 101S to zero (that is, performs initialization) in the partial MAC reset at the time of SCG deactivation.

In step S72, the controller 120 of the UE 100 (MAC entity 101S for SCG 201S) increases the variable Bj managed by the MAC entity 101S by PBR × T while the SCG is in the inactive state.

In step S73, the controller 120 of the UE 100 (MAC entity 101S for SCG 201S) sets the variable Bj managed by the MAC entity 101S to zero (that is, performs initialization) in the MAC reset at the time of SCG activation.

### (2.4) Fourth Operation Example Related to LCP

In the fourth operation example related to LCP, a first process is a processing of maintaining the value of the variable Bj, a second process is a process of maintaining the value of the variable Bj, and a third processing is a process of setting the value of the variable Bj to zero. As a result, when the SCG 201S is switched to the active state, the value of the variable Bj can be set to zero (that is, the initial value). In particular, when the SCG 201S is in the inactive state, the value of the variable Bj is not increased but maintained, and thus the processing load of the UE 100 can be reduced.

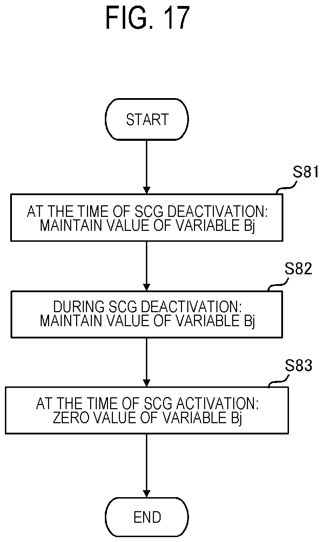

Fig. 17 is a flowchart illustrating the present operation example.

In step S81, the controller 120 of the UE 100 (MAC entity 101S for SCG 201S) maintains the variable Bj managed by the MAC entity 101S without performing initialization in the partial MAC reset at the time of SCG deactivation.

In step S82, the controller 120 of the UE 100 (MAC entity 101S for SCG 201S) maintains the variable Bj managed by the MAC entity 101S without increasing the variable Bj while the SCG is in the inactive state.

In step S83, the controller 120 of the UE 100 (MAC entity 101S for SCG 201S) sets the variable Bj managed by the MAC entity 101S to zero (that is, performs initialization) in the MAC reset at the time of SCG activation.

### (3) Specification Modification Example

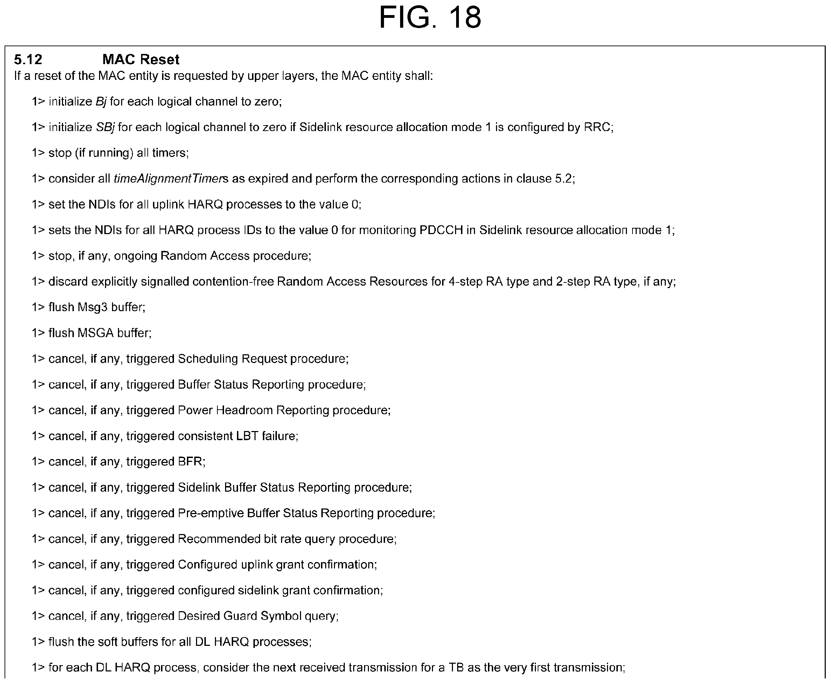

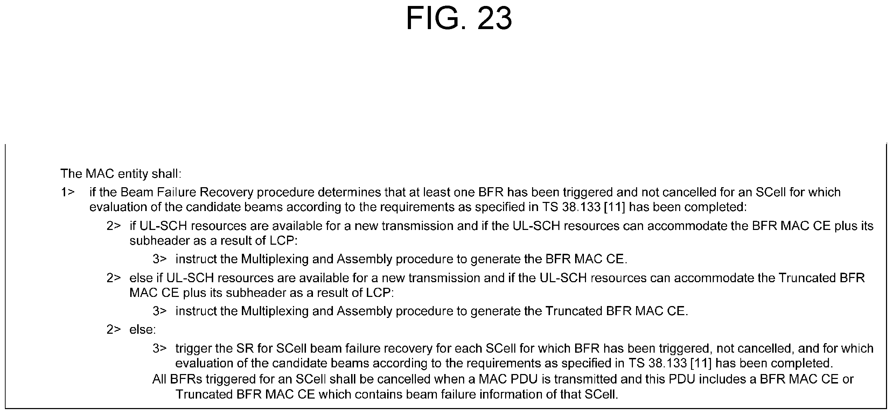

Next, a specification modification example on the technical specification "TS 38.321" of the MAC layer in 5G/NR will be described as a specification modification example according to an embodiment with reference to Figs. 18 to 24.

### (3.1) Specification Modification Example of MAC Reset

Figs. 18 to 20 illustrate specification modification examples of the MAC reset.

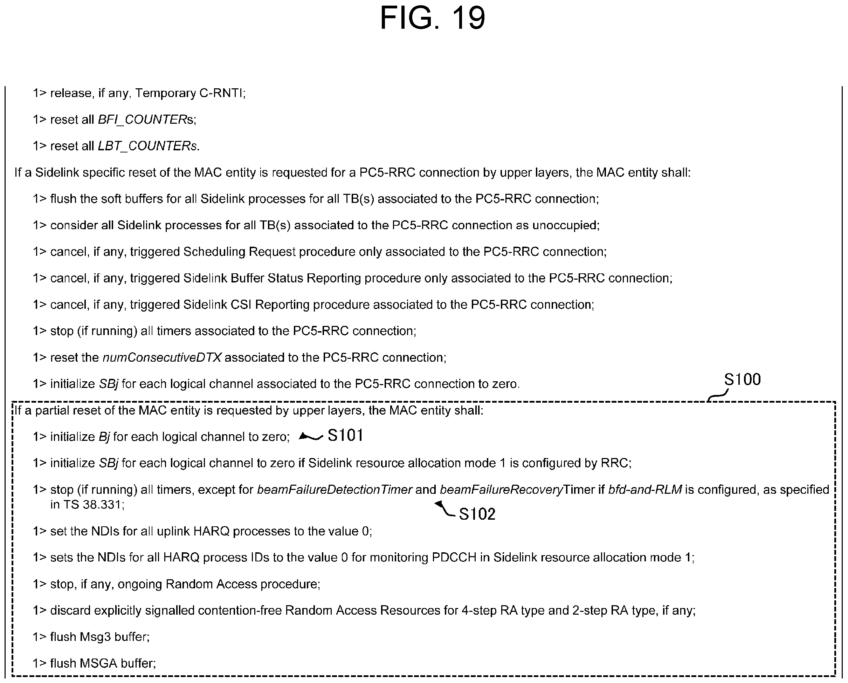

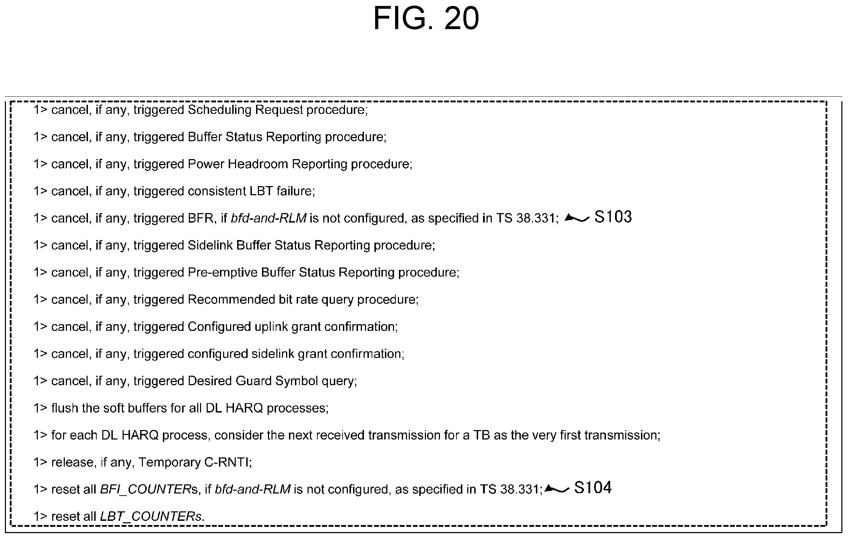

As illustrated in Figs. 19 and 20, in step S100, the MAC entity 101S of the UE 100 performs the partial MAC reset in a case in which the partial reset of the MAC entity 101S is requested from an upper layer. For example, the RRC layer of the UE 100 instructs the MAC entity 101S to perform the partial MAC reset in response to the reception of the SCG deactivation instruction from the network 10. Alternatively, the RRC layer of the UE 100 may give, to the MAC entity 101S, a notification indicating that the SCG deactivation instruction has been received from the network 10, and the MAC entity 101S may initiate the partial MAC reset in response to the notification. Alternatively, the MAC entity 101S of the UE 100 may receive the SCG deactivation instruction from the SN 200S (SCG 2015) through the MAC CE, and the MAC entity 101S may initiate the partial MAC reset in response to the reception of the SCG deactivation instruction.

Step S100 (the partial MAC reset) may include step S101 of initializing the variable Bj managed by the MAC entity 101S for each logical channel. Specifically, the MAC entity 101S executes the process of step S101 in the case of the partial MAC reset of the first operation example and the third operation example related to the LCP described above, but does not execute the process of step S 101 in the case of the second operation example and the fourth operation example related to the LCP described above.

Step S100 (the partial MAC reset) may include step S101 of initializing the variable Bj managed by the MAC entity 101S for each logical channel. Specifically, the MAC entity 101S executes the process of step S 101 in the case of the partial MAC reset of the first operation example and the third operation example related to the LCP described above, but does not execute the process of step S 101 in the case of the second operation example and the fourth operation example related to the LCP described above.

Step S 100 (the partial MAC reset) may include step S102 of stopping all the timers (the timers being operation) except for the BFD timer (beamFailureDetectionTimer) and the BFR timer (beamFailureRecoveryTimer) when "bfd-and-RLM" which is a parameter of RRC is configured. That is, in a case in which "bfd-and-RLM" is configured, the MAC entity 101S continues the timer operation without stopping the BFD timer (beamFailureDetectionTimer) and the BFR timer (beamFailureRecoveryTimer) at the time of SCG deactivation. On the other hand, in a case in which "bfd-and-RLM" is not configured, the MAC entity 101S stops the BFD timer (beamFailureDetectionTimer) and the BFR timer (beamFailureRecoveryTimer) at the time of SCG deactivation. "bfd-and-RLM" is configured in the UE 100 by an RRC message from the network 10. Further, "bfd-and-RLM" indicates that the BFD and radio link monitoring (RLM) are performed while the SCG is in the inactive state.

Step S100 (the partial MAC reset) may include step S103 of canceling the triggered BFR when "bfd-and-RLM" which is the parameter of RRC is not configured. That is, in a case in which "bfd-and-RLM" is configured, the MAC entity 101S continues the BFR without canceling the triggered BFR at the time of SCG deactivation. On the other hand, in a case in which "bfd-and-RLM" is not configured, the MAC entity 101S cancels the triggered BFR at the time of SCG deactivation.

Step S100 (the partial MAC reset) may include step S104 of resetting the BFI counter in a case in which "bfd-and-RLM" which is a parameter of RRC is not configured. That is, in a case in which "bfd-and-RLM" is configured, the MAC entity 101S continues the counting operation without resetting all the BFI counters managed by the MAC entity 101S at the time of SCG deactivation. On the other hand, in a case in which "bfd-and-RLM" is not configured, the MAC entity 101S resets all the BFI counters managed by the MAC entity 101S at the time of SCG deactivation.

### (3.2) Specification Modification Example of BFD and BFR

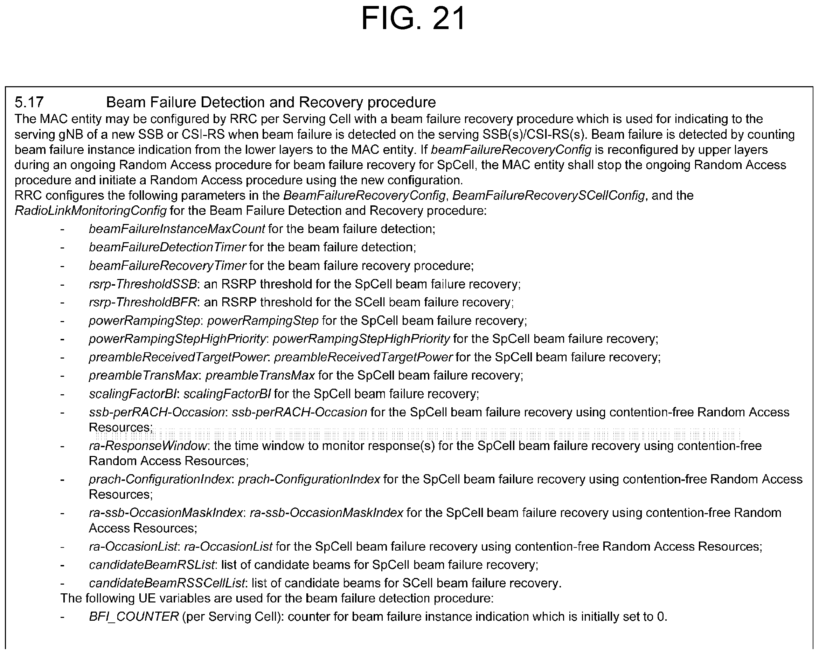

Figs. 21 to 23 illustrate specification modification examples of the beam failure detection and recovery procedure (BFD and BFR).

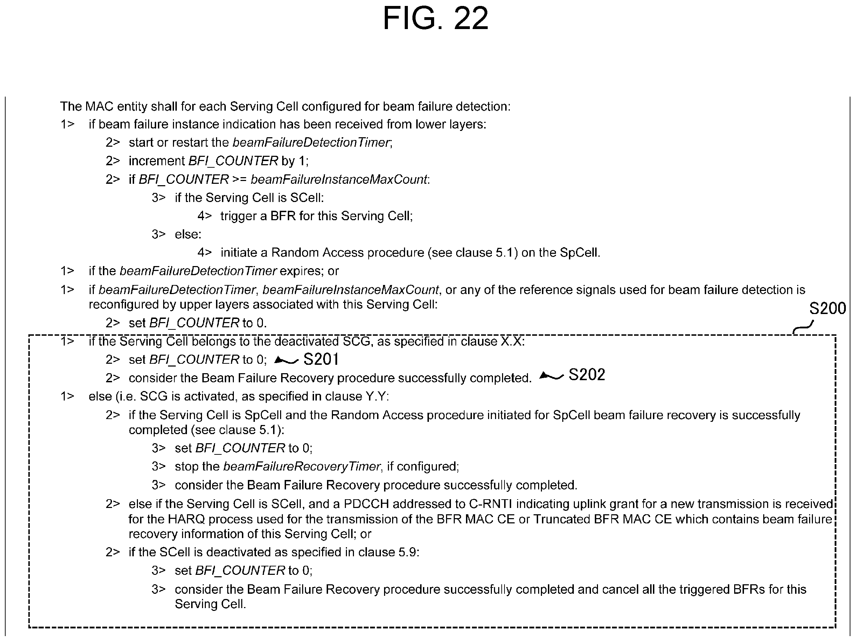

As illustrated in Fig. 22, the BFD and the BFR may include step S200 related to SCG deactivation/activation.

Step S200 may include step S201 of setting the BFI counter to zero for the serving cell belonging to the SCG in the inactive state while the SCG is in the inactive state. Note that, in a case in which the counting operation is continued without resetting the BFI counter at the time of SCG deactivation, the BFI counter may be set to zero after the counting operation ends.

Step S200 may include step S202 of considering that the beam failure recovery procedure (BFR) has been successfully completed for the serving cell belonging to the SCG in the inactive state while the SCG is in the inactive state.

### (3.3) Specification Modification Example of LCP

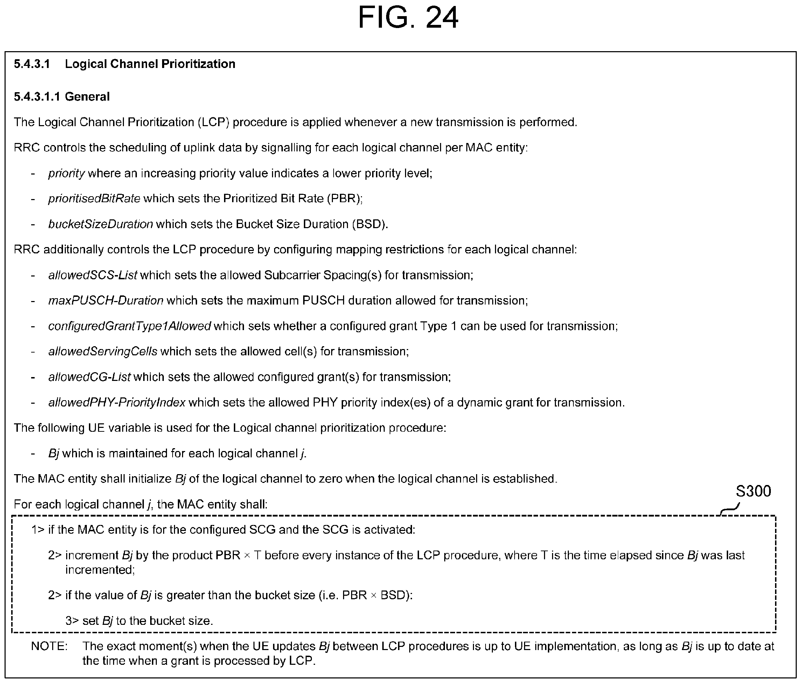

Fig. 24 illustrates a specification modification example of the logical channel prioritization (LCP).

As illustrated in Fig. 24, the LCP may include step S300 related to SCG deactivation/activation. Step S300 is a process of increasing the variable Bj managed by the MAC entity 101S in a case in which the SCG is in the active state. On the other hand, when the SCG is in the inactive state, the variable Bj managed by the MAC entity 101S is not increased but maintained. This operation corresponds to the first operation example and the fourth operation example related to the LCP described above.

### (Other Embodiments)

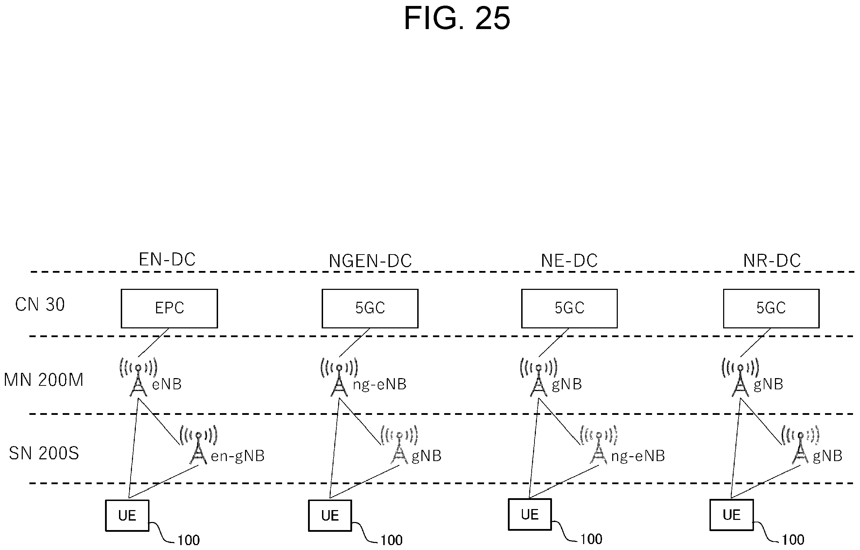

In the above-described embodiment, any one of the four configurations illustrated in Fig. 10 may be applied as the configuration of the DC. As illustrated in Fig. 25, a configuration in which the MN 200M is an E-UTRA base station and the SN 200S is an NR base station is referred to as (NG) EN-DC. Specifically, in a case in which the CN 30 is an EPC, a configuration in which the MN 200M is an E-UTRA base station (eNB) and the SN 200S is an NR base station (en-gNB) is referred to as EN-DC. Further, in a case in which the CN 30 is 5GC, a configuration in which the MN 200M is an E-UTRA base station (ng-eNB) and the SN 200S is an NR base station (gNB) is referred to as NGEN-DC. In a case in which the CN 30 is 5GC, a configuration in which the MN 200M is an NR base station (gNB) and the SN 200S is an E-UTRA base station (ng-eNB) is referred to as NE-DC. Further, in a case in which the CN 30 is 5GC, a configuration in which the MN 200M is an NR base station (gNB) and the SN 200S is also an NR base station (gNB) is referred to as NR-DC.

In the above-described embodiment, the DC in which the UE 100 communicates with the two base stations (MN 200M and SN 200S) has been described, but the UE 100 may perform multiple connection with three or more base stations. Further, the UE 100 may perform multiple connection with two or more other communication apparatuses not limited to the base station.

The operation sequence (and the operation flow) in the above-described embodiment may not necessarily be executed in time series according to the order described in the flow diagram or the sequence diagram. For example, the steps in the operation may be performed in an order different from the order described in the flowchart or the sequence diagram, or may be performed in parallel. In addition, some of the steps in the operation may be removed or additional steps may be added to the process. In addition, the operation sequence (and the operation flow) in the above-described embodiment may be separately and independently performed. Furthermore, the operation sequence (and the operation flow) in the above-described embodiment may be implemented by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to the technical specification of any of LTE or other generation systems (for example, sixth generation) of the 3GPP standard. The base station 200 may be an eNB configured to provide protocol terminations of E-UTRA user plane and control plane toward the UE 100 in LTE. The mobile communication system 1 may be a system conforming to a TS defined in a standard other than the 3GPP standard. The base station 200 may be an integrated access and backhaul (IAB) donor or an IAB node. The UE 100 may be an MT in an IAB node.

A program for causing a computer to execute each process performed by the UE 100 or the base station 200 may be provided. The program may be recorded in a computer readable medium. The program may be installed in the computer by using the computer readable medium. Here, the computer readable medium on which the program is recorded may be a non-transitory recording medium. The non-transitory recording medium is not particularly limited, but may be, for example, a recording medium such as a CD-ROM or a DVD-ROM. In addition, a circuit that executes each processing performed by the UE 100 or the base station 200 may be integrated, and at least a part of the UE 100 or the base station 200 may be a semiconductor integrated circuit (chipset, SoC (system-on-a-chip)).

In the above-described embodiment, "transmit (transmit)" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive (receive)" may mean to perform processing of at least one layer in a protocol stack used for reception, or may mean to physically receive a signal wirelessly or by wire. Alternatively, "receive" may mean a combination of performing the processing of at least one layer and physically receiving a signal wirelessly or by wire. Similarly, "acquire (obtain/acquire)" may mean to acquire information from stored information, may mean to acquire information from information received from another node, or may mean to acquire the information by generating information. Similarly, "include (include)" and "comprise (comprise)" do not mean to include only the listed items, but mean that the terms may include only the listed items or may include additional items in addition to the listed items. Similarly, in the present disclosure, "or (or)" does not mean exclusive OR but means OR.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

### (Supplementary Notes)

Features related to the above-described embodiments are additionally described.

### (Supplementary Note 1)

A communication apparatus (100) configured to perform communication with a master cell group (MCG) (201M) managed by a master node (200M) and a secondary cell group (SCG) (2015) managed by a secondary node (200S), the communication apparatus including:
a controller (120) including a medium access control (MAC) entity (101S) associated with the SCG (201S),
wherein the MAC entity (101S) manages, for each logical channel, a variable that is for uplink resource allocation to each logical channel used for communication with the SCG (201S) and has a value increasing with lapse of time,
the controller (120) is configured to perform, for the variable, a first process when the SCG (201S) is switched to an inactive state, perform a second process while the SCG (201S) is in the inactive state, and perform a third process when the SCG (201S) is switched to an active state, and
the controller (120) is configured to perform the first to third processes such that the value of the variable becomes zero when the SCG (201S) is switched to the active state.

### (Supplementary Note 2)

The communication apparatus (100) according to supplementary note 1,
wherein at least some of the first to third processes are different from the other processes.

### (Supplementary Note 3)

The communication apparatus (100) according to supplementary note 1 or 2,
wherein the first process is a process in partial reset of the MAC entity (101S), and
the third process is a process in reset of the MAC entity (101S).

### (Supplementary Note 4)

The communication apparatus (100) according to any one of supplementary notes 1 to 3,
wherein the first process is a process of setting the value of the variable to zero,
the second process is a process of maintaining the value of the variable, and
the third process is a process of maintaining the value of the variable.

### (Supplementary Note 5)

The communication apparatus (100) according to any one of supplementary notes 1 to 3,
wherein the first process is a process of maintaining the value of the variable,
the second process is a process of increasing the value of the variable, and
the third process is a process of setting the value of the variable to zero.

### (Supplementary Note 6)

The communication apparatus (100) according to any one of supplementary notes 1 to 3,
wherein the first process is a process of setting the value of the variable to zero,
the second process is a process of increasing the value of the variable, and
the third process is a process of setting the value of the variable to zero.

### (Supplementary Note 7)

The communication apparatus (100) according to any one of supplementary notes 1 to 3,
wherein the first process is a process of maintaining the value of the variable,
the second process is a process of maintaining the value of the variable, and
the third process is a process of setting the value of the variable to zero.

### (Supplementary Note 8)

The communication apparatus (100) according to any one of supplementary notes 1 to 7,
wherein the inactive state is a state in which, for each serving cell belonging to the SCG in the inactive state, the communication apparatus (100) does not transmit at least one of channel status information (CSI), a random access channel (RACH), a sounding reference signal (SRS), and a UL-shared channel (UL-SCH) and/or a state in which the communication apparatus (100) does not monitor a physical downlink control channel (PDCCH).

### (Supplementary Note 9)

A communication method of performing communication with a master cell group (MCG) (201M) managed by a master node (200M) and a secondary cell group (SCG) (2015) managed by a secondary node (200S), the communication method including the steps of:
managing, by a medium access control (MAC) entity (101S) associated with the SCG (201S), for each logical channel, a variable that is for uplink resource allocation to each logical channel used for communication with the SCG (201S) and has a value increasing with lapse of time; and
performing, for the variable, a first process when the SCG (201S) is switched to an inactive state, performing a second process while the SCG (201S) is in the inactive state, and performing a third process when the SCG (201S) is switched to an active state,
wherein the step of performing the first to third processes includes a step of performing the first to third processes such that the value of the variable becomes zero when the SCG (201S) is switched to the active state.

## Claims

1. A communication apparatus (100) configured to perform communication with a master cell group (MCG) (201M) managed by a master node (200M) and a secondary cell group (SCG) (2015) managed by a secondary node (200S), the communication apparatus comprising:
a controller (120) including a medium access control (MAC) entity (101S) associated with the SCG (201S),
wherein the MAC entity (101S) manages, for each logical channel, a variable that is for uplink resource allocation to each logical channel used for communication with the SCG (201S) and has a value increasing with lapse of time, and
the controller (120) is configured to perform, for the variable, a first process in reset of the MAC entity (101S) by deactivation of the SCG (201S), perform a second process while the SCG (201S) is in an inactive state, and perform a third process when the SCG (201S) is activated.

2. The communication apparatus (100) according to claim 1,
wherein at least some of the first to third processes are different from the other processes.

3. The communication apparatus (100) according to claim 1 or 2,
wherein the value of the variable is initialized to zero in the first process,
the value of the variable is not initialized in the second process, and
the value of the variable is not initialized in the third process.

4. The communication apparatus (100) according to claim 1 or 2,
wherein the value of the variable is not initialized in the first process,
the value of the variable is increased in the second process, and
the value of the variable is initialized to zero in the third process.

5. The communication apparatus (100) according to claim 1 or 2,
wherein the value of the variable is initialized to zero in the first process,
the value of the variable is increased in the second process, and
the value of the variable is initialized to zero in the third process.

6. The communication apparatus (100) according to claim 1 or 2,
wherein the value of the variable is not initialized in the first process,
the value of the variable is not initialized in the second process, and
the value of the variable is initialized to zero in the third process.

7. The communication apparatus (100) according to claim 1 or 2,
wherein the communication apparatus (100) is configured not to transmit at least one of channel status information (CSI), a random access channel (RACH), a sounding reference signal (SRS), and a UL-shared channel (UL-SCH) and/or not to monitor a physical downlink control channel (PDCCH) for each serving cell belonging to the deactivated SCG.

8. A communication method of performing communication with a master cell group (MCG) (201M) managed by a master node (200M) and a secondary cell group (SCG) (2015) managed by a secondary node (200S), the communication method comprising the steps of:
managing, by a medium access control (MAC) entity (101S) associated with the SCG (201S), for each logical channel, a variable that is for uplink resource allocation to each logical channel used for communication with the SCG (201S) and has a value increasing with lapse of time; and
performing, for the variable, a first process in reset of the MAC entity (101S) by deactivation of the SCG (201S), performing a second process while the SCG (201S) is in an inactive state, and performing a third process when the SCG (201S) is activated.
